# EUROPEAN PATENT APPLICATION

(11) **EP 1 241 273 A2**
(43) Date of publication of application: **18.09.2002**
(21) Application number: 02005788.1
(22) Date of filing: 13.03.2002
(51) Int. Cl.: C21D 1/667, C22F 1/04, C21D 1/613

(54) **Process and device for jet cooling**

(30) Priority: 16.03.2001 JP 2001077150
(71) Applicant: KABUSHIKI KAISHA KOBE SEIKO SHO, Kobe-shi, Hyogo 651-8585 (JP)
(72) Inventor: Meki, Toshiyuki, Chofu Plant in Kobe Steel, Ltd., Shimonoseki-shi, Yamaguchi, 752-0953 (JP); Kawai, Hitoshi, Chofu Plant in Kobe Steel, Ltd., Shimonoseki-shi, Yamaguchi, 752-0953 (JP); Kobayashi, Toshiyuki, Kobe Corp.Res.Lab.i.Kobe Ste, Kobe-shi, Hyogo 651-2271 (JP); Hirano, Masakazu, Chofu Plant in Kobe Steel, Ltd., Shimonoseki-shi, Yamaguchi 752-0953 (JP)
(74) Representative: Müller-Boré & Partner Patentanwälte

(57) **Abstract**

A cooling system capable of adequately press-quenching an extruded product of heat-treatable aluminum alloy immediately after extrusion without causing deformation and warpage in its cross section.

The cooling system consists of a compressor 22 and a plurality of compressed air amplifiers 21 which are arranged in lines around and along the passage of the extruded product. The compressed air amplifiers 21a placed farthest from the exit are modified such that the compressed . air conduit 26 is provided with a hose 36 for water supply. The compressed air amplifiers 21 and 21a receive compressed air at a certain flow rate from the compressor 22, and then they direct cooling air to the surface of the extruded product at an amplified flow rate. The thus generated cooling air cools the extruded product several times faster than fan cooling. In addition, cooling air ejected from the compressed air amplifiers arranged farthest from the exist of the extruder contains mist which rapidly cools the extruded product.

## Description

The present invention relates to a cooling system for press quenching to be applied to extruded products and a method for press quenching with said cooling system. Said extruded products include those of heat-treatable aluminum alloys of 2000, 4000, 6000, and 7000 series.

It is common practice to perform aging treatment on extruded products of heat-treatable aluminum alloys after on-line press quenching or off-line solution treatment and quenching. Aging treatment is intended to improve the strength of extruded products and stabilize the structure of extruded products so as to prevent their mechanical strength from deterioration due to natural aging during their use.

Press quenching employs water or air. Water quenching has the advantage of causing extruded products to acquire almost the same characteristics as in the case of solution treatment and quenching by reheating that follows extrusion. On the other hand, water quenching (as well as mist quenching) suffers the disadvantage of causing extruded products to cool at a high rate on the order of 104 °C/min. Cooling at such a high cooling rate tends to take place unevenly across the cross section depending on the sectional configuration and thickness of extruded products. Such uneven cooling leads to an uneven temperature distribution which results in strain, deformation, and warpage.

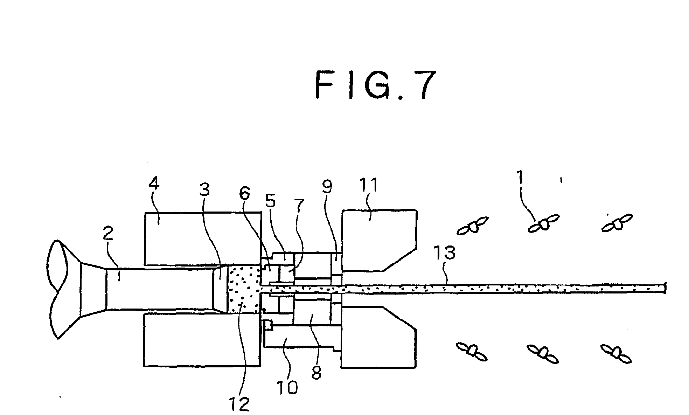

By contrast, air quenching with ordinary fans proceeds at a cooling rate on the order of 10² °C/min at the highest. This offers the advantage of not causing cooling strain. Incidentally, fan cooling needs fans and other components arranged as shown in Fig. 7.
1 : fan, 2 : stem, 3 : pressure plate, 4 : container, 5 : die ring, 6 : die, 7 : backer, 8 : bolster, 9 : sub-bolster, 10 : die slide, 11 : press platen, 12 : billet, 13 : extruded product.

Unfortunately, fan cooling at a slow cooling rate suffers the disadvantage of resulting in incomplete quenching variously depending on alloy composition or sectional shape, which impairs strength (particularly proof stress) after aging treatment.

Attempts have been made to realize a cooling rate greater than that of fan cooling. Such attempts are based on any of technologies proposed so far which are designed to blow air more vigorously than fans, thereby cooling aluminum extruded products after extrusion. These prior arts, however, suffer the disadvantage of requiring a complex apparatus and being incapable of attaining the desired cooling rate efficiently.

The present invention was completed in view of the foregoing problems involved in the conventional water cooling and air cooling for press quenching. It is an object of the present invention to provide a cooling system capable of performing press quenching adequately on extruded products without resulting in deformation and warpage in the cross section.

The present invention to address the above-mentioned problems is directed to a cooling system to perform press quenching on an extruded product immediately after its extrusion, said cooling system comprising a compressed air source and a plurality of compressed air amplifiers which are arranged around and along the passage of the extruded product, said compressed air amplifiers receiving compressed air from said compressed air source and generating air flows toward the surface of the extruded product at an amplified flow rate.

The above-mentioned cooling system is comparatively simple in construction and yet capable of efficiently realizing a cooling rate necessary for performing adequate press quenching without deformation and warpage in the cross section of the extruded product.

The above-mentioned cooling system to perform press quenching may further comprise a water cooling means. In this case the water cooling means should preferably be placed downstream from the above-mentioned compressed air amplifiers.

The combination of air cooling and water cooling permits rapid cooling without deformation and warpage in the cross section and shortens the cooling zone, thereby reducing production cost.

The above-mentioned cooling system to perform press quenching may be modified such that said compressed air amplifiers are at least partly equipped with water supply means. In this case the compressed air amplifiers equipped with water supply means should preferably be placed downstream from the compressed air amplifiers not equipped with water supply means. The water supply means added as mentioned above makes it possible to carry out mist cooling in a simple manner. Each compressed air amplifier may be provided with a mechanism to start and stop water supply at any time so that air cooling (without water) and mist cooling (with water) are switched alternately as desired according to the extruded product.

The above-mentioned cooling system to perform press quenching may be modified such that said compressed air amplifiers are at least partly installed inside the press platen at the exit of the extruder to produce said extruded product. This arrangement permits cooling to start earlier and increases the cooling rate. Moreover, compressed air amplifiers can be smaller in size than other cooling devices in order to attain the same cooling rate. Small compressed air amplifiers can be installed in a narrow space inside the press platen.

The present invention is directed also to a method for press quenching with the above-mentioned cooling system for press quenching. This method is suitable for press-quenching extruded products of heat-treatable aluminum alloy.

According to the present invention, the method for press-quenching extruded products of heat-treatable aluminum alloy comprises directing air flows amplified by said compressed air amplifiers toward the outer surface of the extruded product, thereby cooling the extruded product, and rapidly cooling the extruded product by said water cooling means arranged downstream from said compressed air amplifiers.

Said rapid cooling should preferably be carried out below the critical temperature at which deformation and warpage occur in the cross section due to rapid cooling.

According to the present invention, the method for press quenching employs the above-mentioned cooling system for press quenching consisting of compressed air amplifiers and water supply means. This method is suitable of press-quenching extruded products of heat-treatable aluminum alloy. This method comprises directing air flows amplified by said compressed air amplifiers, which are not provided with said water supply means, toward the outer surface of the extruded product, thereby rapidly cooling the extruded product, and directing mist-containing air flows amplified by said compressed air amplifiers, which are provided with said water supply means, toward the outer surface of the extruded product at the downstream, thereby rapidly cooling said extruded product.

Fig. 1 is a perspective view showing the cooling system according to the present invention.

Figs. 2(a) to 2(c) are a plan view, a front view, and a side elevation, respectively, of the cooling system.

Fig. 3 is a sectional view showing the compressed air amplifier.

Fig. 4 is a schematic representation of a TTP curve for heat-treatable aluminum alloy and T-T curves for different cooling methods.

Fig. 5 is a diagram illustrating the arrangement of the cooling system pertaining to the present invention.

Fig. 6 is a perspective view of another cooling system pertaining to the present invention.

Fig. 7 is a diagram illustrating a conventional fan cooling system.

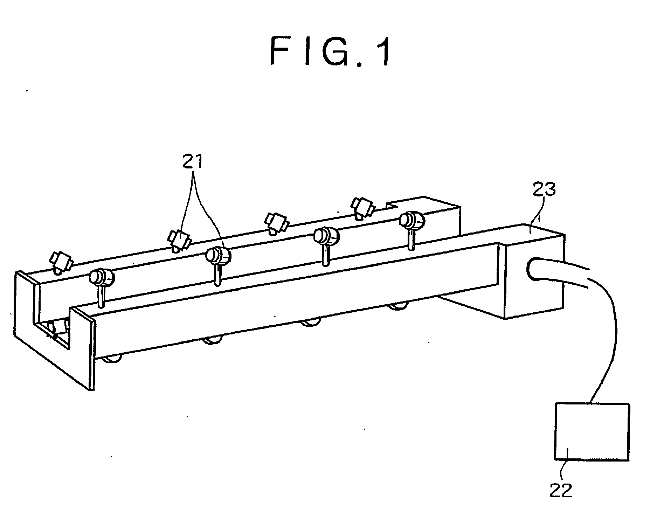

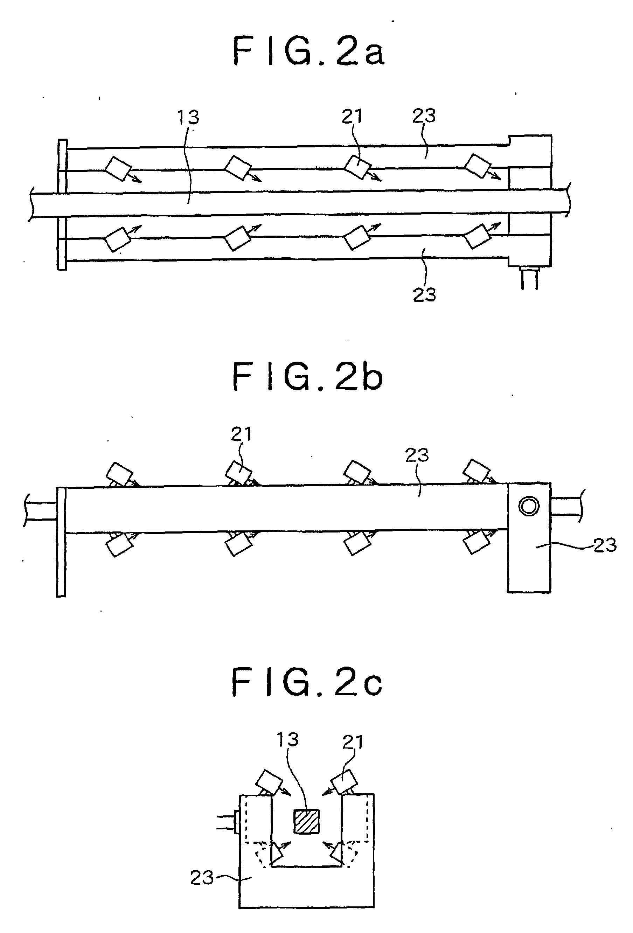

An example of the cooling system according to the present invention is shown in Figs. 1 and 2. This cooling system has a plurality of compressed air amplifiers 21 which are arranged in lines around and along the passage of the extruded product, so that it blows a large amount of air at a high flow rate toward the surface of the extruded product 13. In Figs. 1 and 2, there are shown a compressor 22 (as a compressed air source) and a distributor 23 (hollow box) for compressed air.

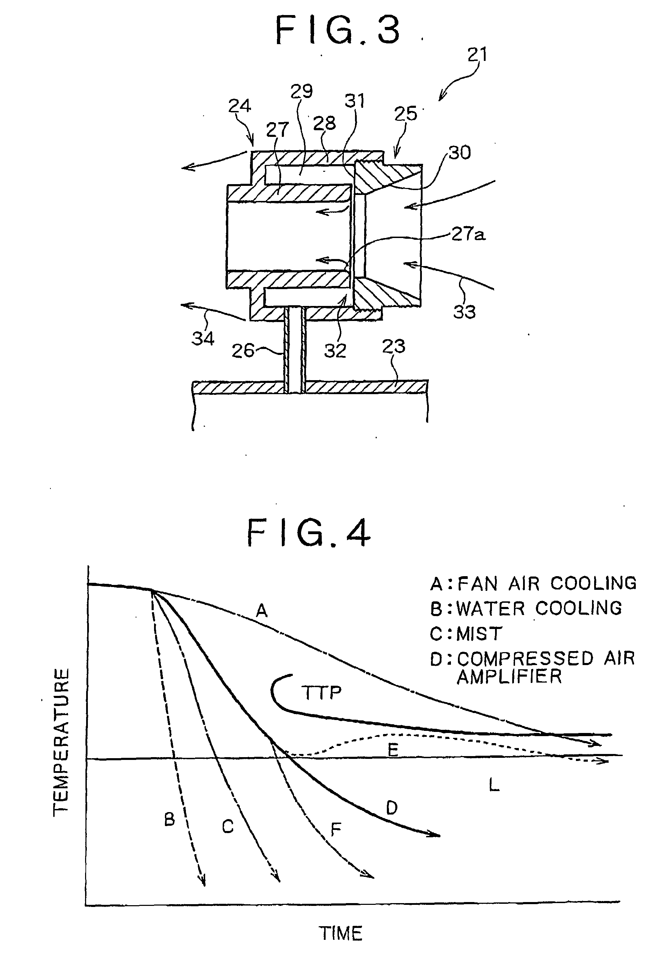

The compressed air amplifier 21, as shown in Fig. 3, consists of a cylindrical body 24 and an annular body 25, which are coaxial with each other, with the former being connected to a distributor 23 through a conduit 26. The cylindrical body 24 consists of an inner cylindrical body 27 and an outer cylindrical body 28, with an annular chamber 29 formed between them. The annular body 25 is fixed to the end of the outer cylindrical body 28, with the outer periphery of the former being partly screwed into the inner periphery of the latter. The annular body 25 has a backwardly expanding inside surface 30. Between the front end surface 31 of the annular body 25 and the rear end surface of the cylindrical body 27 is formed a very small annular gap 32. The rear side of the annular chamber 29 is closed (except for the annular gap 32).

The compressor 22 produces compressed air which flows through the distributor 23, the conduit 26, and the annular chamber 29. Finally, compressed air flows the gap 32 at a high speed in its radial direction. The compressed air flowing past the corner 27a (between the rear end surface and the inner periphery of the cylindrical body 27) bends along the surface of the corner 27a due to Coanda effect (wall effect). Hence, the direction of flow becomes parallel to the axial direction of the cylindrical body 27 (as indicated by solid line arrows). The high-speed air flow catches surrounding air (as indicated by arrows 33), generating an air flow (as indicated by arrows 34) as the result of amplifying action. Incidentally, the compressed air amplifier of this kind is known which is so designed as to receive compressed air at a certain flow rate from a compressed air source and generate a high-speed air flow by amplifying action.

The cooling system with compressed air amplifiers blows a large amount of cooling air at a high speed (30-60 m/s) toward the surface of the extruded product. Thus, it can achieve a high cooling rate on the order of 10³ °C/min, which is 5 to 10 times the maximum cooling rate of fan cooling (at a flow rate of about 10 m/s). The cooling rate varies depending on the heat capacity of the object being cooled (which is determined by the average thickness or the sectional area divided by the peripheral length). Experiments with extruded products of heat-treatable aluminum alloy achieved a cooling rate of 3000°C/min or above and 500-900°C/min for an average thickness of 1 mm and 4 mm, respectively.

Experiments were carried out to see the effect which is produced when the angle between the axis of the compressed air amplifier and the surface of the extruded product is changed, with the minimum distance from the center of the exit of the compressed air amplifier to the surface of the extruded product kept constant. (This minimum distance is the length of the perpendicular drawn from the center to the surface of the extruded product.) The results of the experiments indicate that the cooling rate increases as the direction of the axis of the exit changes in angle with the direction of extrusion. The maximum cooling rate was achieved when the direction of the axis of the exit is 30-60° aslant to the direction of extrusion (measured from the perpendicular to the surface of the extruded product). The cooling rate is low when the axis of the exit is perpendicular to or excessively aslant to the direction of extrusion. Table 1 shows the results of the experiments in which only the upper surface of the extruded product was cooled.

**Table 1**

| Angle (°) | Cooling rate (°C/min) |
|---|---|
| 0 | 260 |
| 15 | 360 |
| 30 | 380 |
| 45 | 400 |
| 60 | 410 |
| 75 | 360 |

How the cooling system functions is schematically illustrated in Fig. 4 by way of a TTP (Time, Temperature, Property) curve for heat-treatable aluminum alloy and T-T (Time-Temperature) curves for different cooling methods. It is noted from Fig. 4 that the T-T curve (A) for fan cooling crosses the TTP curve for the given heat-treatable aluminum alloy, because the cooling rate of fan cooling is small (on the order of 10² °C/min). This means that precipitation takes place (resulting in poor quenching) in the course of cooling. By contrast, the T-T curves (B and C) for water cooling and mist cooling, respectively, do not cross the TTP curve because of their high cooling rate (on the order of 10⁴ °C/min). This means that water cooling and mist cooling provide good quenching but cause deformation and warpage in the cross section of the extruded-product on account of the excessively high cooling rate.

The T-T curve (D) represents cooling by the cooling system equipped with the compressed air amplifiers. It does not cross the TTP curve. Although Fig. 4 is a schematic diagram, it is applicable to actual cooling. In fact, press quenching at a cooling rate on the order of 10³ °C/min can be adequately performed on heat-treatable aluminum alloys of almost all kinds. Since the cooling system of the present invention permits rapid cooling, it merely needs a much shorter cooling zone than that necessary for fan cooling. In addition, it is simple in construction, small in size, and highly resistant to heat. Being installed around the passage of the extruded product, it does not interrupt the run-out puller. Therefore, the cooling system may be partly installed in the space of the press platen 11. In this case, the apparent cooling rate increases because cooling starts earlier than in the case of fan cooling, water cooling, or mist cooling. Moreover, the cooling system of the present invention does not pose the above-mentioned problem involved in fan cooling.

Another important point is that when applied to heat-treatable aluminum alloys, the press quenching according to the present invention does not practically cause deformation and warpage in the cross section of the extruded product so long as the cooling rate is on the order of 10³ °C/min. In addition, the press quenching according to the present invention merely keeps the extruded product at a high temperature for a limited length of time, and hence it prevents recrystallization (which gives rise to coarse grains) more effectively than fan cooling.

Incidentally, there may be an instance where the above-mentioned cooling system causes a trouble when used for press-quenching an extruded product having a large average thickness (sectional area divided by peripheral length). The trouble is that the extruded product which has come out of the cooling zone experiences temperature rise or temperature stagnation due to restoration heat, as indicated by the curve (E) in Fig. 4. The result of this trouble is inadequate quenching (due to precipitation which decreases the amount of solid solution and prevents the increase of strength after aging treatment). This trouble may be avoided if a large number of compressed air amplifiers are arranged so that the cooling zone is extended and the extruded product is cooled sufficiently to a low temperature. (The extended cooling zone is still much shorter than that used for fan air cooling.) In the case of cooling to a low temperature, a certain amount of restoration heat is not a problem. However, cooling to a low temperature may need a high-capacity compressor (which increases the running cost). Another reason for the necessity of arranging more compressed air amplifiers is that the cooling efficiency decreases when the extruded product has been cooled to middle and low temperatures at which the temperature difference is small between the extruded product and cooling air. As the number of compressed air amplifiers increases, the cooling zone becomes longer and the equipment investment increases.

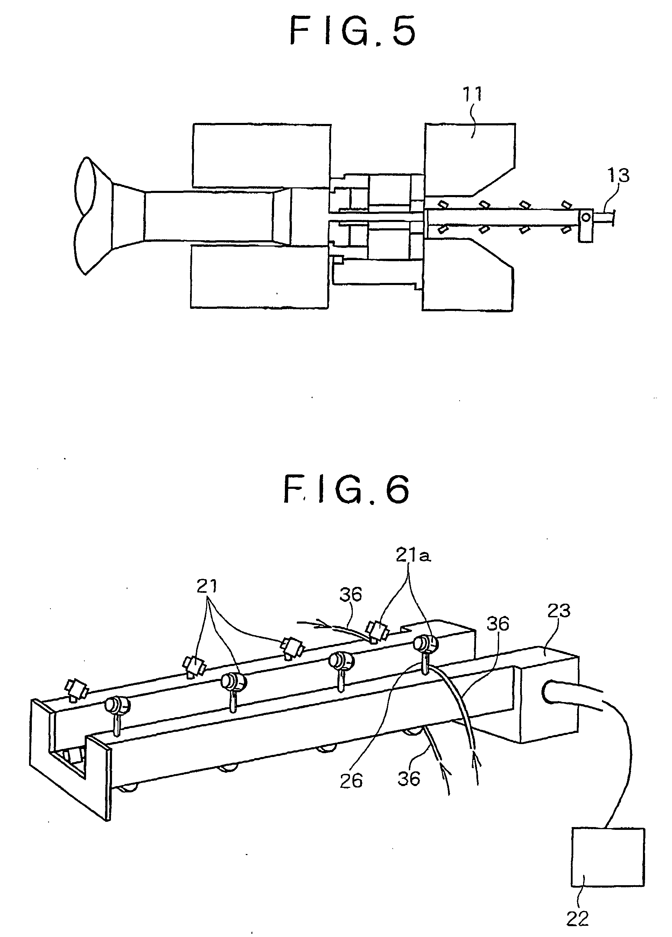

The cooling system may be modified such that it does not cause inadequate quenching but it rather prevents deformation and warpage in the cross section even though the cooling zone is short. An example of such modification is shown in Fig. 6. This cooling system differs from the one mentioned above (shown in Figs. 1 and 2) in that the compressed air amplifiers 21a, which are arranged around the extruded product 13 and farthest from the exit of the extruder, have a hose 36 for water supply connected to the side wall of the conduit 26. The modified compressed air amplifier 21a receives water through the conduit 26 and jets out water mist together with amplified compressed air.

The compressed air amplifier 21a farthest from the exit of the extruder performs a kind of mist cooling, which achieves a cooling rate on the order of 10⁴ °C/min. Cooling in this manner gives a T-T curve (F) as shown in Fig. 4. The extruded product is cooled rapidly and sufficiently by this compressed air amplifier 21a.

By the way, deformation and warpage that occur in the cross section of an extruded product due to rapid cooling are ascribed to heat shrinkage stress (caused by uneven temperature distribution that exists during cooling) exceeding the proof stress of material. In the case of heat-treatable aluminum alloys, such deformation and warpage usually occur when the extruded product is cooled from 250-300°C (surface temperature) at a high cooling rate on the order of 10⁴ °C/min. In other words, there is a critical temperature above which deformation and warpage occur upon rapid cooling and below which deformation and warpage do not occur upon rapid cooling. This critical temperature is determined almost univocally by composition and sectional form.

The cooling system with the compressed air amplifiers 21 and 21a should be operated such that the compressed air amplifiers 21 blow high-speed cooling air only while the extruded product is still at a high temperature and the compressed air amplifiers 21a blow cooling air together with water for rapid cooling when the extruded product has been cooled below the critical temperature (indicated by the straight line L in Fig. 4). In this way it is possible to prevent deformation and warpage in the cross section due to rapid cooling. It is also possible to shorten the cooling zone further. Water supply to the compressed air amplifiers 21a should be performed only when necessary.

Incidentally, the cooling system shown in Fig. 6 may be modified such that the hose 36 is provided with a valve to control the supply of water to the compressed air amplifier 21a. (This vale is not shown in Fig. 6.)

In addition, the cooling system shown in Fig. 6 is constructed such that only the compressed air amplifiers at the most downstream position are provided with the hose 36. The illustration is not intended to restrict the embodiment. More compressed air amplifiers than shown at the downstream position may be provided with the hose 36. In this case it is desirable to provide each hose with a valve to control water supply, so that the ranges of air cooling and mist cooling are adjusted according to the extruded product. Since the above-mentioned critical temperature varies depending on the extruded product, it is necessary to establish an adequate cooling pattern according to the extruded product. The above-mentioned construction permits one to establish a desired cooling pattern easily.

The quenching method and cooling system according to the present invention permits sufficient cooling to a low temperature even though the extruded product has a large average thickness. Therefore, they easily prevent temperature rise or temperature stagnation that causes inadequate quenching, even though there exists restoration heat. In addition, this can be achieved with a short cooling zone.

In the above-mentioned embodiment, the compressed air amplifiers 21a arranged farthest from the exit are supplied with water for rapid cooling. The present invention is not restricted to this embodiment. It is possible to arrange other compressed air amplifiers and it is also possible to supercede conventional cooling with a water bath, water spray, or mist.

The present invention can be adequately applied to hollow extrusions with various cross sections which are used for automobile frames. It may also be applied to solid extrusions. Although these extrusions are not limited in thickness, those which have an average thickness of 1-5 mm are most desirable.

## Claims

1. A cooling system to perform press quenching on an extruded product immediately after its extrusion comprising:
a compressed air source; and
a plurality of compressed air amplifiers which are arranged around and along the passage of the extruded product, said compressed air amplifiers receiving compressed air from
said compressed air source and generating air flows toward the surface of the extruded product at an amplified flow rate.

2. The cooling system as defined in Claim 1, which further comprises a water cooling means.

3. The cooling system as defined in Claim 2, wherein the water cooling means is placed downstream from the compressed air amplifiers.

4. The cooling system as defined in anyone of Claims 1 to 3, wherein the compressed air amplifiers are at least partly equipped with water supply means.

5. The cooling system as defined in Claim 4, wherein the compressed air amplifiers equipped with water supply means are placed downstream from the compressed air amplifiers not equipped with water supply means.

6. The cooling system as defined in anyone of Claims 1 to 5, wherein the compressed air amplifiers are at least partly installed inside the press platen at the exit of the extruder to produce said extruded product.

7. A method for press quenching with the cooling system for press quenching defined in anyone of Claims 1 to 6, said method being applied to press-quenching extruded products of heat-treatable aluminum alloy.

8. A method for press-quenching extruded products of heat-treatable aluminum alloy with the cooling system for press quenching defined in Claim 3, said method comprising directing air flows amplified by the compressed air amplifiers toward the outer surface of the extruded product, thereby cooling the extruded product, and rapidly cooling the extruded product by the water cooling means arranged downstream from the compressed air amplifiers.

9. A method for press-quenching extruded products of heat-treatable aluminum alloy with the cooling system for press quenching defined in Claim 4, said method comprising directing air flows amplified by the compressed air amplifiers, which are not provided with the water supply means, toward the outer surface of the extruded product, thereby rapidly cooling the extruded product, and directing mist-containing air flows amplified by the compressed air amplifiers, which are provided with the water supply means, toward the outer surface of the extruded product at the downstream, thereby rapidly cooling said extruded product.
